# EUROPÄISCHE PATENTSCHRIFT

(11) **EP 0 721 963 B1**
(45) Veröffentlichungstag und Bekanntmachung des Hinweises auf die Patenterteilung: **29.07.1998**
(21) Anmeldenummer: 95119974.4
(22) Anmeldetag: 18.12.1995
(51) Int. Cl.: C08G 18/10, C08G 18/42, C08J 9/14

(54) **Verfahren zur Herstellung von FCKW-freien Polyurethan-Hartschaumstoffen mit einer verminderten Wärmeleitfähigkeit und ihre Verwendung**
Process for the preparation of CFC-free polyurethane rigid foams of reduced thermal conductivity and its use
Procédé pour la préparation de mousse de polyuréthane rigide sans fluorocarbure ayant une conductivité thermique améliorée

(30) Priorität: 10.01.1995 DE 19500466
(43) Veröffentlichungstag der Anmeldung: 17.07.1996
(73) Patentinhaber: Elastogran GmbH, D-49440 Lemförde (DE)
(72) Erfinder: Adams, Stefan, Dr., D-67065 Ludwigshafen (DE); Seifert, Holger, Dr., D-01705 Freital (DE)
(74) Vertreter: Karau, Wolfgang, Dr.

(56) Entgegenhaltungen:
- EP-A- 0 421 269
- EP-A- 0 547 515
- EP-A- 0 610 752
- WO-A-93/08224

## Beschreibung

Gegenstände der Erfindung sind ein Verfahren zur Herstellung von FCKW-freien, im wesentlichen geschlossenzelligen Polyurethan- im folgenden abgekürzt PU genannt - Hartschaumstoffen mit einer verminderten Wärmeleitfähigkeit durch Umsetzung von (a) mit Urethangruppen modifizierten Polyester-Isocyanatsemiprepolymeren mit einem Isocyanatgehalt von 31 bis 20 Gew.-% mit (b) höhermolekularen Verbindungen, die mindestens zwei reaktive Wasserstoffatome besitzen und vorteilhafterweise Aryleneinheiten gebunden haben und gegebenenfalls (c) niedermolekularen Kettenverlängerungs- und/oder Vernetzungsmitteln in Gegenwart von (d) Treibmitteln, vorzugsweise Treibmittelmischungen aus Cyclopentan und/oder Cyclohexan und Wasser, wobei vollständig halogenierte Fluorchlorkohlenwasserstoffe als Treibmittel ausgenommen sind, (e) Katalysatoren und gegebenenfalls (f) Zusatzstoffen und die Verwendung dieser PU-Hartschaumstoff-Formulierungen zum Ausschäumen von Hohlräumen in Kühlmöbeln oder Heizungselementen sowie die PU-Hartschaumstoffe als Dämmstoff für Verbundelemente, z.B. als Isolierschalen für (Fern)heizungsrohre.

Die Herstellung von Verbund- oder Sandwichelementen, die aufgebaut sind aus einem PU-Hartschaumstoff und mindestens einer Deckschicht aus einem starren oder elastischen Material, wie z.B. Papier, Kunststoffolien, Metallblechen, Glasvliesen, Spanplatten u.a., ist bekannt. Bekannt ist ferner die Ausschäumung von Hohlräumen in Haushaltsgeräten, wie Kühlmöbeln, beispielsweise Kühlschränken oder -truhen oder von Heißwasserspeichern, durch Einbringen einer fließfähigen Reaktionsmischung zur Bildung der PU-Hartschaumstoffe als Wärmedämmstoff. Um Schaumfehlstellen zu vermeiden, muß hierzu das schäumfähige PU-Reaktionsgemisch innerhalb einer kurzen Zeit in den zu isolierenden Hohlraum eingefüllt werden. Zum Ausschäumen derartiger Gegenstände werden üblicherweise Niederdruck- oder vorzugsweise Hochdruckmaschinen eingesetzt.

Eine zusammenfassende Übersicht über die Herstellung von PU-Hartschaumstoffen und ihre Verwendung als Deck- oder vorzugsweise Kernschicht in Verbundelementen sowie ihre Anwendung als Dämmschicht in der Kühl- oder Heizungstechnik wurde z.B. publiziert in Polyurethane, Kunststoff-Handbuch, Band 7, 1. Auflage 1966, herausgegeben von Dr. R. Vieweg und Dr. A. Höchtlen, und 2. Auflage 1983, herausgegeben von Dr. Günter Oertel, Carl Hanser Verlag, München, Wien.

Hierfür geeignete wärme- und kältedämmende PU-Hartschaumstoffe können bekanntermaßen durch Umsetzung von organischen Polyisocyanaten mit einer oder mehreren höhermolekularen Verbindungen mit mindestens zwei reaktiven Wasserstoffatomen, vorzugsweise Polyester- und/oder Polyether-polyolen, sowie üblicherweise unter Mitverwendung von niedermolekularen Kettenverlängerungsmitteln und/oder Vernetzungsmitteln in Gegenwart von Treibmitteln, Katalysatoren oder gegebenenfalls Hilfsmitteln und/oder Zusatzstoffen hergestellt werden. Bei geeigneter Wahl der Aufbaukomponenten können hierbei PU-Hartschaumstoffe erhalten werden mit einer niedrigen Wärmeleitzahl und guten mechanischen Eigenschaften.

Als Treibmittel zur Herstellung der wärme- und kältedämmenden PU-Hartschaumstoffe wurden weltweit in großem Maßstabe Fluorchloralkane (FCKW), vorzugsweise Trichlorfluormethan, eingesetzt. Nachteilig an diesen Treibgasen ist lediglich die Belastung der Umwelt, da sie in Verdacht stehen, in der Stratosphäre am Abbau der Ozonschicht beteiligt zu sein.

Es hat daher nicht an Versuchen gefehlt, die FCKW durch Treibmittel, die nur geringe oder zweckmäßigerweise keine Umweltschäden verursachen, zu ersetzen.

Die Verwendung von Isocyanat-terminierten Prepolymeren zur Herstellung von Polyurethan-Hartschäumen ist im Stand der Technik beschrieben, wobei nach WO 93/08224 vorzugsweise FCKW als Treibmittel Verwendung finden und in der EP-A 547 515 Wasser als bevorzugtes Treibmittel beschrieben ist.

Nach Angaben der EP-A-351 614 (US-A-4 972 002) können als Treibmittel fluorierte Kohlenwasserstoffe, perfluorierte Kohlenwasserstoffe, Schwefelhexafluorid oder Mischungen aus mindestens zwei dieser Verbindungen verwendet werden. Da diese fluorierten oder perfluorierten Treibmittel in den Aufbaukomponenten zur Herstellung der Polyisocyanat-Polyadditionsprodukte schwer- oder unlöslich sind, werden sie in mindestens einem organischen und/oder modifizierten organischen Polyisocyanat, mindestens einer höhermolekularen Verbindung mit mindestens zwei reaktiven Wasserstoffatomen oder einer Mischung aus mindestens einer höhermolekularen Verbindung mit mindestens zwei reaktiven Wasserstoffatomen und einem niedermolekularen Kettenverlängerungs- und/oder Vernetzungsmittel emulgiert. Nach dieser Methode können zellige Kunststoffe mit gleichmäßiger und feiner Zellstruktur hergestellt werden. Nachteilig an diesem Verfahren ist lediglich die geringe Auswahl an geeigneten fluorierten oder perfluorierten Verbindungen mit einem Siedepunkt in dem erforderlichen Siedepunktsbereich und der hohe Preis für diese Treibmittel. Um zellhaltige Kunststoffe mit der technisch gewünschten Zellstruktur zu erhalten, ist man auf eine eng begrenzte Auswahl von Mischungen aus Perfluorpentan und Perfluorhexan angewiesen.

Zur Herstellung von zellhaltigen Kunststoffen nach dem Polyisocyanat-Polyadditionsverfahren haben sich nach Angaben der DE-A-41 43 148 als Treibmittel (d), gegebenenfalls in Verbindung mit Wasser, auch sehr gut Mischungen bewährt, die enthalten mindestens eine niedrigsiedende, in den Aufbaukomponenten (a), (b) oder (c) schwer- oder unlösliche, fluorierte oder perfluorierte, organische Verbindung und mindestens ein Isoalkan mit 6 bis 12 Kohlenstoffatomen.

PU-Hartschaumstoffe mit geringer Wärmeleitfähigkeit werden ferner in der EP-A-0 421 269 (US-A-5 096 933) beschrieben. Als Treibmittel verwendet werden, vorzugsweise in Kombination mit Wasser, Cyclopentan oder Mischungen, zweckmäßigerweise mit einem Siedepunkt unter 50°C, die enthalten:
Cyclopentan und/oder Cyclohexan und mindestens eine inerte, niedrigsiedende, mit Cyclopentan und/oder Cyclohexan homogen mischbare Verbindung, vorzugsweise aus der Gruppe der Alkane, Cycloalkane mit maximal 4 Kohlenstoffatomen, Dialkylether, Cycloalkylenether und Fluoralkane.
Durch eine geeignete Auswahl der Treibmittel, die als Zellgas über einen beträchtlichen Zeitraum im PU-Hartschaumstoff verbleiben, da ihre Diffusionsrate sehr gering ist, insbesondere, wenn die PU-Hartschaumstoffe allseitig mit Kunststoff- oder Metalldeckschichten versehen sind, konnte die Wärmeleitfähigkeit der PU-Hartschaumstoffe beträchtlich vermindert werden.

Da der Wärmetransport von einer warmen zu einer kalten Stelle in einem Schaumstoff beispielsweise über die Schaumstoffmatrix, über das Zellgas und durch Strahlung erfolgen kann, besteht weiterhin das Bedürfnis, die Wärmeleitfähigkeit von PU-Hartschaumstoffen durch geeignete Maßnahmen zu minimieren und dadurch den Energieverbrauch, z.B. in Kühlmöbeln, oder die Wärmeabgabe, z.B. von (Fern)heizungssystemen und Warmwasserspeichern durch Dämmelemente zu verringern.

Bekannt ist ferner die Verwendung von mit Polyester-polyolen modifizierten Polyisocyanatmischungen zur Herstellung von Urethangruppen oder Urethan- und Isocyanuratgruppen aufweisenden Hartschaumstoffen.

Nach Angaben z.B. der EP-A-0 239 704 finden zur Herstellung von PU-Schaumstoffen Urethangruppen enthaltende Polyisocyanatmischungen mit einem NCO-Gehalt von 15 bis 32 Gew.-% Verwendung, die hergestellt werden durch Umsetzung eines Polyester-polyols mit einer Mischung aus 45 bis 95 Gew.-% Diphenylmethan-diisocyanaten (MDI) und 55 bis 5 Gew.-% eines Polyphenyl-polymethylen-polyisocyanats (PMDI) mit einer Funktionalität von 3 und mehr. Die EP-A-0 358 328 beschreibt ebenfalls Isocyanatmischungen, die enthalten 10 bis 90 Gew.-% eines NCO-Prepolymeren mit einer Funktionalität von 2,0 bis 2,3 auf Basis eines Polyester-polyols und 90 bis 10 Gew.-% eines NCO-Prepolymeren mit einer Funktionalität von 2,0 bis 2,3 auf Basis eines Polyoxyalkylen-polyols mit einem Ethylenoxidgehalt von 3 bis 50 Gew.-%. NCO-Prepolymere werden ferner gemäß DD 237 758 hergestellt durch Umsetzung von 4,4'-MDI mit verschiedenen Polyoxyalkylen-polyolen und gegebenenfalls Polyester-polyolen.

Polyurethan(PU)-Polyisocyanurat(PIR)-Hartschaumstoffe mit niedriger Wärmeleitfähigkeit können nach Angaben der US-A-4 888 365 aus isocyanatgruppenhaltigen Prepolymeren auf Polyester-polyolbasis hergestellt werden, wobei die Polyester-polyole erhalten werden durch Umesterung von Polyethylenterephthalatabfall oder durch Veresterung von Phthalsäureanhydrid mit aliphatischen mehrwertigen Alkoholen. Als Treibmittel zur Herstellung dieser PU-PIR-Schaumstoffe finden jedoch, gegebenenfalls in Verbindungen mit Wasser, Fluorchlorkohlenwasserstoffe, vorzugsweise Trichlorfluormethan, Verwendung, die bekanntermaßen eine äußerst geringe Wärmeleitfähigkeit aufweisen. Die Patentschrift vermittelt keinerlei Lehre bezüglich der Verwendung von nicht perhalogenierten Treibmitteln auf die PU-PIR-Matrix bzw. auf PU-Hartschaumstoffe, hergestellt unter Verwendung von Polyester-Isocyanatsemiprepolymeren.

Die Aufgabe der vorliegenden Erfindung bestand darin, die Wärmeleitfähigkeit von PU-Hartschaumstoffen weiter zu reduzieren. Hierbei sollte auf die Verwendung von toxischen und/oder umweltschädlichen Treibmitteln möglichst vollständig verzichtet werden. Die Polyol- und Polyisocyanatkomponenten (A) bzw. (B) sollten lagerbeständig sein und die Reaktionsmischung zur Herstellung der PU-Hartschaumstoffe sollte sehr gut fließfähig sein und schrumpffrei aushärten.

Diese Aufgabe konnte überraschenderweise gelöst werden durch die Verwendung von mit Urethangruppen modifizierten, speziellen Polyester-Isocyanatsemiprepolymeren als Polyisocyanatkomponente (B) und zweckmäßigerweise (Cyclo)alkanen als Treibmittel zur Herstellung der PU-Hartschaumstoffe.

Gegenstand der Erfindung ist somit ein Verfahren zur Herstellung von FCKW-freien PU-Hartschaumstoffen mit einer weiter verminderten Wärmeleitfähigkeit durch Umsetzung von
a) mindestens einer mit Urethangruppen modifizierten organischen Polyisocyanatmischung mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren und gegebenenfalls
f) Zusatzstoffen,
das dadurch gekennzeichnet ist, daß man als mit Urethangruppen modifizierte Polyisocyanatmischungen (a) Polyester-Isocyanatsemiprepolymere mit einem NCO-Gehalt von 31 bis 20 Gew.-% verwendet, erhältlich durch Umsetzung einer überschüssigen Menge mindestens eines aromatischen Polyisocyanats mit mindestens einem Polyester-polyol mit einer Hydroxylzahl von 22 bis 400 auf Basis von aromatischen und/oder aliphatischen Dicarbonsäuren und/oder Dicarbonsäurederivaten und als Treibmittel (d) in Verbindung mit Wasser verwendet, (d2) Mischungen, enthaltend
(d2i) Cyclopentan, Cyclohexan oder ein Gemisch dieser Cycloalkane und
(d2ii) niedrigsiedende, mit Cyclopentan und/oder Cyclohexan homogen mischbare Verbindungen.

Nach einer bevorzugten Ausführungsform finden zur Herstellung der Polyester-Isocyanatsemiprepolymeren Polyester-polyole, hergestellt durch Polykondensation von Alkandicarbonsäuren mit 4 bis 6 C-Atomen und Mischungen aus Alkandiolen mit 2 bis 6 C-Atomen und Dialkylen-glykolen mit 4 bis 8 C-Atomen und als höhermolekularen Verbindungen (b) vorteilhafterweise Polyether-polyole, hergestellt durch anionische Polyaddition von Ethylenoxid und/ oder 1,2-Propylenoxid an aromatische Reste enthaltende Startermoleküle Verwendung.

Durch das erfindungsgemäße Verfahren kann die Wärmeleitfähigkeit der im wesentlichen geschlossenzelligen PU-Hartschaumstoffe, hergestellt unter sonst identischen Bedingungen um mindestens 0,5 mW/mK, vorzugweise um 0,6 bis 2,7 mW/mK und mehr reduziert werden.

Zur Herstellung der PU-Hartschaumstoffe und den zu ihrer Herstellung beispielsweise geeigneten Ausgangskomponenten möchten wir folgendes ausführen:
a) Erfindungsgemäß werden zur Herstellung der FCKW-freien PU-Hartschaumstoffe Polyester-Isocyanatsemiprepolymere mit einem NCO-Gehalt von 31 bis 20 Gew.-%, vorzugsweise 31 bis 25 Gew.-%, bezogen auf das Gesamtgewicht verwendet, die in an sich bekannter Weise erhältlich sind durch Umsetzung einer überschüssigen Menge mindestens eines aromatischen Polyisocyanats mit mindestens einem Polyester-polyol mit einer Hydroxylzahl von 22 bis 400, vorzugsweise von 22 bis 180 bei Verwendung von aliphatischen Polyester-polyolen und von 220 bis 340 bei Verwendung von aromatischen Polyester-polyolen.
   Als geeignete aromatische Polyisocyanate zur Herstellung der erfindungsgemäß verwendbaren Polyester-Isocyanatsemiprepolymeren seien beispielsweise genannt 4,4'-, 2,4'- und 2,2'-Diphenylmethan-diisocyanat, Polyphenyl-polymethylen-polyisocyanate, 2,4- und 2,6-Toluylen-diisocyanat und Mischungen aus mindestens zwei der genannten aromatischen Polyisocyanate. Als aromatische Polyisocyanate vorzüglich bewährt haben sich und daher vorzugsweise verwendet werden Mischungen aus Diphenylmethan-diisocyanat-Isomeren und Polyphenyl-polymethylenpolyisocyanaten, wobei solche mit einem Diphenylmethan-diisocyanat-Isomerengehalt von beispielsweise 30 bis 80 Gew.-%, vorzugsweise 35 bis kleiner 45 Gew.-% und insbesondere kleiner 40 Gew.-% bevorzugt sind.
   Geeignete Polyester-polyole mit Hydroxylzahlen von 22 bis 400 zur Herstellung der Polyester-Isocyanatsemiprepolymeren sind erhältlich durch Polykondensation von Alkandicarbonsäuren, vorzugsweise solchen mit 4 bis 6 C-Atomen, aromatischen Dicarbonsäuren, vorzugsweise Phthalsäure, oder entsprechenden Dicarbonsäurederivaten, z.B. Dicarbonsäure-mono- und/oder -dialkylestern mit 1 bis 4 C-Atomen im Alkylrest oder Dicarbonsäureanhydriden, mit Alkandiolen mit 2 bis 6 C-Atomen, Dialkylen-glykolen mit 4 bis 8 C-Atomen oder vorzugsweise Mischungen aus derartigen Alkandiolen und Dialkylen-glykolen. Als bevorzugt verwendbare Polyester-polyolaufbaukomponenten seien beispielhaft genannt: Als aliphatische Dicarbonsäuren Mischungen aus Bernstein-, Glutar- und Adipinsäure, z.B. solche in Mengenverhältnissen von 20 bis 35:35 bis 50:20 bis 32 Gew.-Teilen und insbesondere Adipinsäure, als aromatische Dicarbonsäure Phthalsäure, als Alkandiol Ethandiol und als Dialkylen-glykol Diethylen-glykol. Als Polyester-polyolaufbaukomponenten eignen sich ferner organische Dicarbonsäuren, wie z.B. Bernstein-, Glutar-, Malein- und Fumarsäure sowie Isophthal- und Terephthalsäure, ihre Dicarbonsäure-mono- und/oder -dialkylester und Dicarbonsäureanhydride, Alkandiole, wie z.B. 1,2-Propandiol, 1,4-Butandiol, 1,5-Pentandiol und 1,6-Hexandiol und Dialkylen-glykole, wie z.B. Dipropylen-glykol und Dibutylen-glykol sowie Lactone, wie z.B. £-Caprolacton oder Hydroxycarbonsäuren wie z.B. ω-Hydroxycapronsäure und Hydroxybenzoesäure. Die als bevorzugt hervorgehobenen und die ergänzend beispielhaft genannten Polyester-polyolaufbaukomponenten können einzeln oder in Form von Mischungen aus mindestens zwei Dicarbonsäuren und/oder -derivaten und mindestens zwei Alkandiolen und/oder Dialkylen-glykolen verwendet werden. Als Polyester-polyole vorzugsweise verwendet werden aliphatische Polyester-polyole, z.B. solche aus aliphatischen Dicarbonsäuren und/oder -derivaten, Alkandiolen und/oder Dialkylen-glykolen. Vorteilhafterweise eingesetzt werden Polyester-polyole, die mindestens 10 Gew.-%, vorzugsweise mindestens 25 Gew.-% Reste von aromatischen und/oder insbesondere aliphatischen Dicarbonsäuren gebunden haben. Vorzugsweise Verwendung finden Poly(ethandiol-diethylen-glykolphthalate) mit Hydroxylzahlen von 180 bis 400, vorzugsweise von 220 bis 340 und insbesondere bevorzugt sind Poly(ethandiol-diethylen-glykoladipate) mit Hydroxylzahlen von 22 bis 180, vorzugsweise 40 bis 100.
   Die Herstellung der erfindungsgemäß verwendbaren Polyester-Isocyanatsemiprepolymeren mit einem NCO-Gehalt von 31 bis 20 Gew.-% kann nach bekannten Verfahrensweisen durchgeführt werden. Üblicherweise werden die aromatischen Polyisocyanate hierzu in einem geeigneten Reaktionsgefäß auf Temperaturen von 40° bis 110°C, vorzugsweise 60° bis 80°C erwärmt. Über einen Zeitraum von z.B. 5 bis 120 Minuten, vorzugsweise 15 bis 60 Minuten werden die Polyester-polyole unter Rühren in einer solchen Menge hinzugefügt, daß das Verhältnis von NCO-:OH-Gruppen 1:0,01 bis 1:0,2, vorzugsweise 1:0,02 bis 1:0,1 und insbesondere 1:0,02 bis 1:0,05 beträgt. Zur Vervollständigung der Umsetzung wird die Reaktionsmischung zweckmäßigerweise im vorgenannten Temperaturbereich noch 0,5 bis 2 Stunden gerührt und anschließend auf Raumtemperatur abkühlt. Nach einer anderen Verfahrensvariante können die aromatischen Polyisocyanate mit einer Polyester-polyolmenge, die einem NCO-:OH-Gruppenverhältnis von ungefähr 1:0,05 bis 1:0,3, vorzugsweise 1:0,1 bis 1:0,2 entspricht, zur Reaktion gebracht und danach die gebildete, mit Urethangruppen modifizierte Polyisocyanatmischung mit demselben oder einem anderen aromatischen Polyisocyanat abgemischt werden, so daß im Polyester-Isocyanatsemiprepolymeren 30 bis 70 Gew.-%, vorzugsweise 40 bis 60 Gew.-% unmodifizierte aromatische Polyisocyanate vorliegen.
b) Als höhermolekulare Verbindungen mit mindestens zwei reaktiven Wasserstoffatomen (b) kommen vorzugsweise Polyhydroxylverbindungen mit einer Funktionalität von 2 bis 8, vorzugsweise 3 bis 8 und einer Hydroxylzahl von 100 bis 850, vorzugsweise 120 und 770, in Betracht.
   Beispielhaft genannt seien hydroxylgruppenhaltige Polyesteramide, hydroxylgruppenhaltige Polyacetale, hydroxylgruppenhaltige aliphatische Polycarbonate und vorzugsweise Polyester-polyole und Polyether-polyole. Anwendung finden auch Mischungen aus mindestens zwei der genannten Polyhydroxylverbindungen sowie mit Polyhydroxylverbindungen mit Hydroxylzahlen kleiner als 100, sofern die Mischungen eine durchschnittliche Hydroxylzahl im vorgenannten Bereich aufweisen.
   Geeignete Polyester-polyole können beispielsweise aus organischen Dicarbonsäuren mit 2 bis 12 Kohlenstoffatomen, vorzugsweise aromatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure und Adipinsäure und insbesondere Mischungen aus Phthalsäure und/oder Phthalsäureanhydrid und Adipinsäure, Mischungen aus Phthalsäure(anhydrid), Isophthalsäure und Adipinsäure oder Dicarbonsäuregemische aus Bernstein-, Glutar- und Adipinsäure und Mischungen aus Terephthalsäure und Adipinsäure oder Dicarbonsäuregemische aus Bernstein-, Glutar- und Adipinsäure. Beispiele für zwei- und mehrwertige Alkohole, insbesondere Diole sind: Ethandiol, Diethylen-glykol, 1,2- bzw. 1,3-Propandiol, Dipropylen-glykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylen-glykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure und Hydroxybenzoesäuren.
   Zur Herstellung der Polyester-polyole können die organischen, z.B. aliphatischen und vorzugsweise aromatischen und Mischungen aus aromatischen und aliphatischen Polycarbonsäuren und/ oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 3 und eine Hydroxylzahl von 150 bis 600 und insbesondere von 200 bis 400.
   Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie z.B. gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak und mehrwertige, insbesondere zwei- und/oder dreiwertige Alkohole, wie z.B. Ethandiol, Propandiol-1,2 und -1,3, Diethylen-glykol, Dipropylen-glykol, Butandiol-1,4, Hexandiol-1,6, Glycerin, Trimethylolpropan, Pentaerythrit, Sorbit und Saccharose, mehrwertige Phenole, wie z.B. 4,4'-Dihydroxy-diphenylmethan und 4,4'-Dihydroxy-diphenylpropan-2,2. Resole, wie z.B. oligomere Kondensationsprodukte aus Phenol und Formaldehyd und Mannich-Kondensate aus Phenolen, Formaldehyd und Dialkanolaminen sowie Melamin.
   Als höhermolekulare Verbindungen (b) verwendbar sind ferner Polyether-polyole mit einer Funktionalität von 2 bis 8 und einer Hydroxylzahl von 100 bis 850, die hergestellt werden durch anionische Polyaddition von mindestens einem Alkylenoxid, vorzugsweise Ethylenoxid oder 1,2-Propylenoxid oder 1,2-Propylenoxid und Ethylenoxid, an mindestens eine, mindestens eine Hydroxyl-, Amino- und/oder Carboxylgruppen aufweisende aromatische Verbindung mit mindestens zwei reaktiven Wasserstoffatomen als Startermoleküle. Als derartige Startermoleküle beispielhaft genannt seien aromatische Polycarbonsäuren, wie z.B. Hemimellithsäure, Trimellithsäure, Trimesinsäure und vorzugsweise Phthalsäure, Isophthalsäure und Terephthalsäure oder Mischungen aus mindestens zwei der genannten Polycarbonsäuren, Hydroxycarbonsäuren wie z.B. Salicylsäure, p- und m-Hydroxybenzoesäure und Gallussäure, Aminocarbonsäuren, wie z.B. Anthranilsäure, m- und p-Aminobenzoesäure, Polyphenole, wie z.B. Resorcin und vorzugsweise Dihydroxy-diphenyl-methane und -propane-2,2, Mannich-Kondensate aus Phenolen, Formaldehyd und Dialkanolaminen, vorzugsweise Diethanolamin, und vorzugsweise aromatischen Polyamine, wie z.B. 1,2-, 1,3- und 1,4-Phenylen-diamin und insbesondere 2,3-, 2,4-, 3,4- und 2,6-Toluylendiamin, 4,4'-, 2,4'- und 2,2'-Diamino-diphenylmethan, Polyphenyl-polymethylen-polyamine, Mischungen aus Diamino-diphenylmethanen und Polyphenyl-polymethylen-polyaminen wie sie z.B. durch Kondensation von Anilin mit Formaldehyd gebildet werden, und Mischungen aus mindestens zwei der genannten Polyamine.
   Die Herstellung von Polyether-polyolen unter Verwendung derartiger mindestens difunktioneller aromatischer Startermoleküle ist bekannt und wird beispielsweise beschrieben in den Patentpublikationen DD-A-290 201, DD-A-290 202, DE-A-34 12 082, DE-A-4 232 970 und GB-A-2 187 449.
   Die Polyether-polyole besitzen eine Funktionalität von vorzugsweise 3 bis 8 und insbesondere 3 bis 6 und Hydroxylzahlen von vorzugsweise 120 bis 770 und insbesondere 240 bis 570.
   Als Polyether-polyole eignen sich ferner Melamin-Polyetherpolyol-Dispersionen gemäß EP-A-23 987 (US-A-4 293 657), Polymer-Polyetherpolyol-Dispersionen, hergestellt aus Polyepoxiden und Epoxidharzhärtern in Gegenwart von Polyether-polyolen gemäß DE 29 43 689 (US 43 05 861), Dispersionen von aromatischen Polyestern in Polyhydroxylverbindungen gemäß EP-A-62 204 (US-A-44 35 537) oder DE-A 33 00 474, Dispersionen von organischen und/oder anorganischen Füllstoffen in Polyhydroxylverbindungen gemäß EP-A-11 751 (US 42 43 755), Polyharnstoff-Polyether-polyol-Dispersionen gemäß DE-A-31 25 402, Tris-(hydroxyalkyl)isocyanurat-Polyether-polyol-Dispersionen gemäß EP-A-136 571 (US 4 514 526) und Kristallitsuspensionen gemäß DE-A-33 42 176 und DE-A-33 42 177 (US 45 60 708), wobei die Ausführungen in den genannten Patentveröffentlichungen als Bestandteil der Patentbeschreibung zu betrachten sind.
   Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder phenolischen Polyolen gemischt werden.
   Als hydroxylgruppenhaltige Polyacetale kommen z.B. die aus Glykolen, wie Diethylen-glykol, Triethylen-glykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen die an sich bekannter Art in Betracht, die beispielsweise durch Umsetzung von Diolen, wie Propandiol-(1,3), Butandiol-(1,4) und/oder Hexandiol-(1,6), Diethylen-glykol, Triethylen-glykol oder Tetraethylen-glykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Als höhermolekulare Verbindungen mit mindestens zwei reaktiven Wasserstoffatomen (b) eignen sich ferner phenolische und halogenierte phenolische Polyole, wie z.B. Benzylethergruppen aufweisende Resol-polyole. Resol-polyole dieser Art können beispielsweise hergestellt werden aus Phenol, Formaldehyd, zweckmäßigerweise Paraformaldehyd und mehrwertigen aliphatischen Alkoholen und werden z.B. beschrieben in den EP-A-0 116 308 und EP-A-0 116 310.
   Als höhermolekulare Verbindungen (b) vorteilhafterweise verwendet werden können ferner Mischungen aus Polyether-polyolen, die enthalten mindestens ein Polyether-polyol auf Basis eines aromatischen, polyfunktionellen Startermoleküls und mindestens ein Polyether-polyol auf Basis eines nichtaromatischen Startermoleküls, vorzugsweise eines 3- bis 8-wertigen Alkohols.
c) Die PU-Hartschaumstoffe können ohne oder unter Mitverwendung von Kettenverlängerungs- und/oder Vernetzungsmitteln hergestellt werden. Zur Modifizierung der mechanischen Eigenschaften kann sich jedoch der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden, vorzugsweise Alkanolamine und insbesondere Diole und/oder Triole mit Molekulargewichten kleiner als 400, vorzugsweise 60 bis 300. In Betracht kommen beispielsweise Alkanolamine, z.B. Ethanolamin und/oder Isopropanolamin, Dialkanolamine wie z.B. Diethanolamin, N-Methyl-, N-Ethyldiethanolamin, Diisopropanolamin, Trialkanolamine wie z.B. Triethanolamin, Triisopropanolamin und die Additionsprodukte aus Ethylenoxid oder 1,2-Propylenoxid und Alkylendiaminen mit 2 bis 6 C-Atomen im Alkylenrest wie z.B. N,N,N',N'-Tetra(2-hydroxyethyl)ethylendiamin und N,N,N',N'-Tetra(2-hydroxypropyl)ethylendiamin, aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylen-glykol, Dipropylen-glykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und aromatischen Diaminen, wie z.B. Toluylen-diaminen und/oder Diamino-diphenylmethanen sowie den vorgenannten Alkanolaminen, Diolen und/oder Triolen als Startermoleküle.
   Sofern zur Herstellung der PU-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise 2 bis 5 Gew.-%, bezogen auf das Gewicht der Polyhydroxylverbindung zum Einsatz.
d) Als Treibmittel zur Herstellung der PU-Hartschaumstoffe finden Mischungen (d2) in Verbindung mit Wasser Verwendung, die enthalten
   (d2i) Cyclopentan, Cyclohexan oder eine Mischung aus den genannten Cycloalkanen und
   (d2ii) mindestens eine niedrigsiedende, mit Cyclopentan und/ oder Cyclohexan homogen mischbare Verbindung, vorzugsweise einer Verbindung mit einem Siedepunkt unter 40°C.

   Die als Treibmittel geeigneten Verbindungen der genannten Art können ausgewählt werden aus der Gruppe der Alkane, Cycloalkane mit maximal 4 Kohlenstoffatomen, Dialkylether, Cycloalkylenether, Fluoralkane und wasserstoffhaltigen, halogenierten Kohlenwasserstoffe (HFCKW). Verwendbar sind auch Mischungen aus mindestens zwei Verbindungen der genannten Verbindungsgruppen. Beispielhaft genannt seien im einzelnen: Alkane, wie z.B. Propan, n-Butan, Isobutan, n- und iso-Pentan sowie technische Pentangemische, Cycloalkane, wie z.B. Cyclobutan, Dialkylether, wie z.B. Dimethylether, Methylethylether, Methylbutylether oder Diethylether, Cycloalkylenether, wie z.B. Furan, und Fluoralkane, die in der Troposphäre abgebaut werden und deshalb für die Ozonschicht unschädlich sind, wie z.B. Trifluormethan, Difluormethan, Difluorethan, Tetrafluorethan und Heptafluorpropan sowie HFCKW wie z.B. Difluorchlormethan, 1,1-Difluor-1-chlorethan und vorzugsweise Dichlorfluorethan.
   Die bevorzugt verwendeten Treibmittel können alleine oder vorzugsweise in Verbindung mit Wasser verwendet werden, wobei sich folgende Kombinationen vorzüglich bewährt haben, so daß sie zweckmäßigerweise eingesetzt werden: Wasser und Cyclopentan, Wasser und Cyclopentan oder Cyclohexan oder eine Mischung dieser Cycloalkane und mindestens eine Verbindung aus der Gruppe n-Butan, Isobutan, n- und iso-Pentan, technische Pentangemische, Cyclobutan, Methylbutylether, Diethylether, Furan, Trifluormethan, Difluormethan, Difluorethan, Tetrafluorethan, Heptafluorpropan und Dichlorfluorethan. Die in Kombination mit Cyclohexan und insbesondere mit Cyclopentan eingesetzte Menge an niedrigsiedenden, mit Cyclopentan und/oder Cyclohexan homogen mischbaren Verbindungen wird so bemessen, daß die erhaltene Mischung vorteilhafterweise einen Siedepunkt von unter 50°C, insbesondere von 30 bis 0°C besitzt. Die hierfür erforderliche Menge ist abhängig von dem Verlauf der Siedepunktskurven der Mischung und kann nach bekannten Methoden experimentell ermittelt werden. PU-Hartschaumstoffe mit geringer Leitfähigkeit werden insbesondere dann erhalten, wenn als Treibmittel (d) pro 100 Gew.-Teile der Aufbaukomponente (b) verwendet werden:
   d1) 3 bis 22 Gew.-Teile, vorzugsweise 5 bis 18 Gew.-Teile und insbesondere 8 bis 14 Gew.-Teile Cyclopentan und 0 bis 7 Gew.-Teile, vorzugsweise 1,0 bis 5,0 Gew.-Teile und insbesondere 2,2 bis 4,5 Gew.-Teile Wasser oder
   d2i) 2 bis 22 Gew.-Teile, vorzugsweise 5 bis 19 Gew.-Teile und insbesondere 9 bis 19 Gew.-Teile Cyclopentan und/ oder Cyclohexan,
   d2ii) 0,1 bis 18 Gew.-Teile, vorzugsweise 0,5 bis 10 Gew.-Teile und insbesondere 1,0 bis 6,0 Gew.-Teile mindestens einer mit Cyclopentan und/oder Cyclohexan homogen mischbaren Verbindung mit einem Siedepunkt unter 40°C, ausgewählt aus der Gruppe Alkane, Cycloalkane mit maximal 4 C-Atomen, Dialkylether, Cycloalkylenether und Fluoralkane und
      0 bis 7 Gew.-Teile, vorzugsweise 1,0 bis 5,0 Gew.-Teile und insbesondere 2,2 bis 4,5 Gew.-Teile Wasser.

   Zur Herstellung der PU-Hartschaumstoffe wird das Cyclopentan (d1) oder die Treibmittelmischung (d2) vorzugsweise in Verbindung mit Wasser nach an sich bekannten Methoden mindestens einer Aufbaukomponente (a), (b) oder (c) zur Herstellung des PU-Hartschaumstoffs, gegebenenfalls unter Druck, einverleibt oder es wird direkt der Reaktionsmischung, zweckmäßigerweise mittels einer geeigneten Mischvorrichtung, zugeführt.
   Treibmittel der genannten Art werden beschrieben z.B. in der EP-A-0 421 269 (US-A-5,096,933), die in vollem Umfange als Bestandteil der Patentbeschreibung zu betrachten ist.
   Als Treibmittel in Betracht kommen beispielsweise auch lagerstabile, treibmittelhaltige Emulsionen, die enthalten mindestens einen niedrigsiedenden, in den Aufbaukomponenten (a) bis (c) schwer- oder unlöslichen, partiell fluorierten oder perfluorierten Kohlenwasserstoff mit 3 bis 8 Kohlenstoffatomen, Schwefelhexafluorid oder Mischungen davon und mindestens eine Aufbaukomponente (a), (b) oder (c) gemäß EP-A-0 351 614 oder Emulsionen aus Mischungen aus den vorgenannten niedrigsiedenden, in den Aufbaukomponenten (a) bis (c) schwer- oder unlöslichen, partiell fluorierten oder perfluorierten Kohlenwasserstoffen mit 3 bis 8 Kohlenstoffatomen und mindestens einem Isoalkan mit 6 bis 12 Kohlenstoffatomen oder Cycloalkan mit 4 bis 6 Kohlenstoffatomen und mindestens einer Aufbaukomponente (a), (b) oder (c) z.B. gemäß DE-A-41 43 148.
e) Als Katalysatoren (e) werden insbesondere Verbindungen verwendet, die die Reaktion der Hydroxylgruppen enthaltenden Verbindungen der Komponenten (b) und gegebenenfalls (c) mit den erfindungsgemäßen Polyester- Isocyanatsemiprepolymeren stark beschleunigen. In Betracht kommen organische Metallverbindungen, vorzugsweise organische Zinnverbindungen, wie Zinn-(II)-salze von organischen Carbonsäuren, z.B. Zinn-(II)-diacetat, Zinn-(II)-dioctoat, Zinn-(II)-diethylhexanoat und Zinn-(II)-dilaurat und die Dialkylzinn-(IV)-salze von organischen Carbonsäuren, z.B. Dibutyl-zinndiacetat, Dibutyl-zinndilaurat, Dibutyl-zinnmaleat und Dioctyl-zinndiacetat. Die organischen Metallverbindungen werden allein oder vorzugsweise in Kombination mit stark basischen Aminen eingesetzt. Genannt seien beispielsweise Amidine, wie 1,8-Diazabicyclo(5.4.0)-undecen-7, 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin oder -hexandiamin, Pentamethyl-diethylentriamin, Tetramethyl-diaminodiethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere 1,3,5-Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2,5 Gew.-% Katalysator bzw. Katalysatorkombination bezogen auf das Gewicht der Komponente (b).
f) Der Reaktionsmischung zur Herstellung der PU-Hartschaumstoffe können gegebenenfalls auch noch Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel, fungistatisch und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Hartschaumstoffes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie z.B. silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxid und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.
   Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Hartschaumstoffe werden die Polyester-Isocyanatsemiprepolymeren (a), die höhermolekularen Verbindungen mit mindestens zwei reaktiven Wasserstoffatomen (b) und gegebenenfalls Kettenverlängerungsmittel und/oder Vernetzungsmittel (c) in solchen Mengen zur Umsetzung gebracht, daß das Äquivalenz-Verhältnis von NCO-Gruppen der Polyester-Isocyanatsemiprepolymeren (a) zur Summe der reaktiven Wasserstoffatome der Komponenten (b) und gegebenenfalls (c) 0,85 bis 1,80:1, vorzugsweise 0,95 bis 1,35:1 und insbesondere ungefähr 1,0 bis 1,15:1, beträgt. Sofern die PU-Hartschaumstoffe durch die Bildung von Isocyanuratgruppen modifiziert werden, beispielsweise zur Erhöhung der Flammwidrigkeit, wird üblicherweise ein Verhältnis von NCO-Gruppen der Polyester-Isocyanatsemiprepolymeren (a) zur Summe der reaktiven Wasserstoffatome der Komponente (b) und gegebenenfalls (c) von 1,8 bis 10:1, vorzugsweise 2,0 bis 6:1 angewandt.

Die PU-Hartschaumstoffe können diskontinuierlich oder kontinuierlich nach bekannten Verfahren, beispielsweise dem one shot-Verfahren mit Hilfe bekannter Mischvorrichtungen hergestellt werden. Als besonders vorteilhaft hat es sich erwiesen, nach dem Zweikomponenten-Verfahren zu arbeiten und die Aufbaukomponente (b), (d), (e) und gegebenenfalls (c) und (f) in der Komponente (A) zu vereinigen und als Komponente (B) die Polyester-Isocyanatsemiprepolymeren oder Mischungen aus Polyester-Isocyanatsemiprepolymeren und gegebenenfalls Treibmittel (d) zu verwenden.

Die Ausgangskomponenten werden bei einer Temperatur von 15 bis 90°C, vorzugsweise von 20 bis 35°C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen läßt. Zur Bildung von Verbundelementen beschichtet man zweckmäßigerweise die Rückseite einer Deckschicht, z.B. durch Begießen oder Besprühen, mit der schaumfähigen Reaktionsmischung und läßt diese aufschäumen und zum PU-Hartschaumstoff aushärten.

Die nach dem erfindungsgemäßen Verfahren hergestellten, im wesentlichen geschlossenzelligen PU-Hartschaumstoffe besitzen vorzugsweise Dichten von 20 bis 50 g/l und eine Wärmeleitfähigkeit üblicherweise von kleiner 0,020, beispielsweise von 0,020 bis 0,017 W/m·K und weniger. Die Geschlossenzelligkeit der PU-Hartschaumstoffe ist zweckmäßigerweise größer als 86 %, vorzugsweise größer als 93 % und insbesondere größer als 96 %.

Die PU-Hartschaumstoffe finden vorzugsweise Verwendung als wärmedämmende Zwischenschicht in Verbundelementen und zum Ausschäumen von Hohlräumen in Kühlmöbelgehäusen, insbesondere für Kühlschränke und Gefriertruhen, und als Außenmantel von Heißwasserspeichern und Fernheizungsrohren. Die Produkte eignen sich ferner zur Isolierung von erwärmten Materialien, als Motorabdeckung und als Rohrschalen.

### Beispiele

### Herstellung der Polyester-Isocyanatsemiprepolymeren

### Beispiele AI bis CIII

In einem heizbaren Reaktionsgefäß, ausgestattet mit Rührer, wurde unter einer Atmosphäre aus getrocknetem Stickstoff eine Mischung aus Diphenylmethan-diisocyanaten und Polyphenyl-polymethylen-polisocyanaten mit einem NCO-Gehalt von 32,4 Gew.-% und einem Diphenylmethan-diisocyanat-Isomerengehalt von 39 Gew.-% - in der nachfolgenden Tabelle 1 abgekürzt Roh-MDI genannt - auf 80°C erwärmt.

Zu der Polyisocyanatmischung wurden unter Rühren die Polyester-polyole mit gleichmäßiger Geschwindigkeit in einem Zeitraum von 15 Minuten hinzugefügt und zur Vervollständigung der Umsetzung die Reaktionsmischung bei 80°C 60 Minuten gerührt.

Die verwendeten Mengen aus Roh-MDI und die Art und Menge des verwendeten Polyester-polyols sowie der NCO-Gehalt und die Viskosität der hergestellten Polyester-Isocyanatsemiprepolymeren sind in Tabelle 1 zusammengefaßt.

In Tabelle 1 bedeuten:

| | |
|---|---|
| PES I | Ein Polyester-polyol mit einer Hydroxylzahl von 240 mg KOH/g und einer Viskosität, gemessen bei 75°C mit einem Haake Rotationsviskosimeter, von 185 mPa·s, hergestellt durch Polykondensation von Phthalsäureanhydrid mit Ethandiol und Diethylenglykol im Molverhältnis 1:1:1. |
| | |
| PES II | Ein Polyester-polyol mit einer Hydroxylzahl von 315 mg KOH/g und einer Viskosität, gemessen bei 25°C mit einem Haake Rotationsviskosimeter, von 2500 mPa·s, hergestellt durch Polykondensation von Phthalsäureanhydrid mit Ethandiol und Diethylenglykol im Molverhältnis 1:1:1. |
| | |
| PES III | Ein Polyester-polyol mit einer Hydroxylzahl von 56 mg KOH/g und einer Viskosität, gemessen bei 25°C mit einem Haake Rotationsviskosimeter, von 525 mPa·s, hergestellt durch Polykondensation von Adipinsäure mit Ethandiol und Diethylenglykol im Molverhältnis 1:1:1. |

### Herstellung der PU-Hartschaumstoffe

### Polyolkomponente I: (E)

Mischung, die bestand aus

| | |
|---|---|
| 64,78 | Gew.-Teilen eines Polyoxypropylen-polyols mit einer Hydroxylzahl von 440, hergestellt durch Propoxylierung einer Startermolekülmischung aus Glycerin und Sucrose, |
| 13,39 | Gew.-Teilen eines Polyoxypropylen-polyoxyethylen-polyols mit einer Hydroxylzahl von 115, hergestellt durch Propoxylierung von N,N-Dimethyl-dipropylentriamin und anschließend Ethoxylierung des Polyoxypropylenaddukts, |
| 4,46 | Gew.-Teilen eines Polyoxypropylen-glykols mit einer Hydroxylzahl von 250, |
| 2,01 | Gew.-Teilen N,N-Dimethylcyclohexylamin, |
| 0,36 | Gew.-Teilen Pentamethyldiethylentriamin, |
| 0,27 | Gew.-Teilen einer Lösung von 47 Gew.-% Kaliumacetat in Ethylenglykol, |
| 2,23 | Gew.-Teilen eines Schaumstabilisators auf Silikonbasis (Tegostab® B8462), |
| 1,78 | Gew.-Teilen Wasser und |
| 10,71 | Gew.-Teilen technisches Cyclopentan mit einem Cyclopentangehalt größer als 96 Gew.-%. |

### Polyolkomponente II: (F)

Mischung, die bestand aus

| | |
|---|---|
| 43,3 | Gew.-Teilen eines Polyoxypropylen-polyols mit einer Hydroxylzahl von 440, hergestellt durch Propoxylierung einer Startermolekülmischung aus Glycerin und Sucrose, |
| 12,0 | Gew.-Teilen eines Polyoxypropylen-glykols mit einer Hydroxylzahl von 105, |
| 20,0 | Gew.-Teilen eines Polyoxypropylen-polyols mit einer Hydroxylzahl von 490, hergestellt durch Propoxylierung einer Startermolekülmischung aus wäßrigem Glycerin und Sucrose, |
| 1,2 | Gew.-Teilen eines Schaumstabilisators auf Silikonbasis (Tegostab®B 8409), |
| 0,3 | Gew.-Teilen Bis(N,N-dimethylaminoethyl)ether, |
| 0,7 | Gew.-Teilen N,N,N',N'-Tetramethyl-hexamethylendiamin-1,6, |
| 0,4 | Gew.-Teilen Tris(dimethylaminopropyl)-s-hexahydrotriazin, |
| 0,4 | Gew.-Teilen N,N-Dimethylcyclohexylamin, |
| 1,7 | Gew.-Teilen Wasser und |
| 20,0 | Gew.-Teilen Dichlorfluorethan (R 141b). |

### Beispiele 1 bis 7 und Vergleichsbeispiele 8 bis 11 und I und II

Zur Herstellung der PU-Hartschaumstoffe wurden die Polyester-Isocyanatsemiprepolymeren oder Roh-MDI und die Polyolkomponente bei 23°C unter intensivem Rühren in solchen Mengen gemischt, daß der Isocyanatindex 110 betrug. Die Reaktionsmischung wurde in ein auf 40°C temperiertes metallisches Formwerkzeug eingefüllt und im geschlossenen Formwerkzeug aufschäumen und aushärten lassen.

Die verwendeten Einsatzstoffe und ihre Mengen sowie die Dichten der hergestellten PU-Hartschaumstoff-Formkörper und die an den Formkörpern gemessene Wärmeleitfähigkeit sind in Tabelle 2 zusammengefaßt.

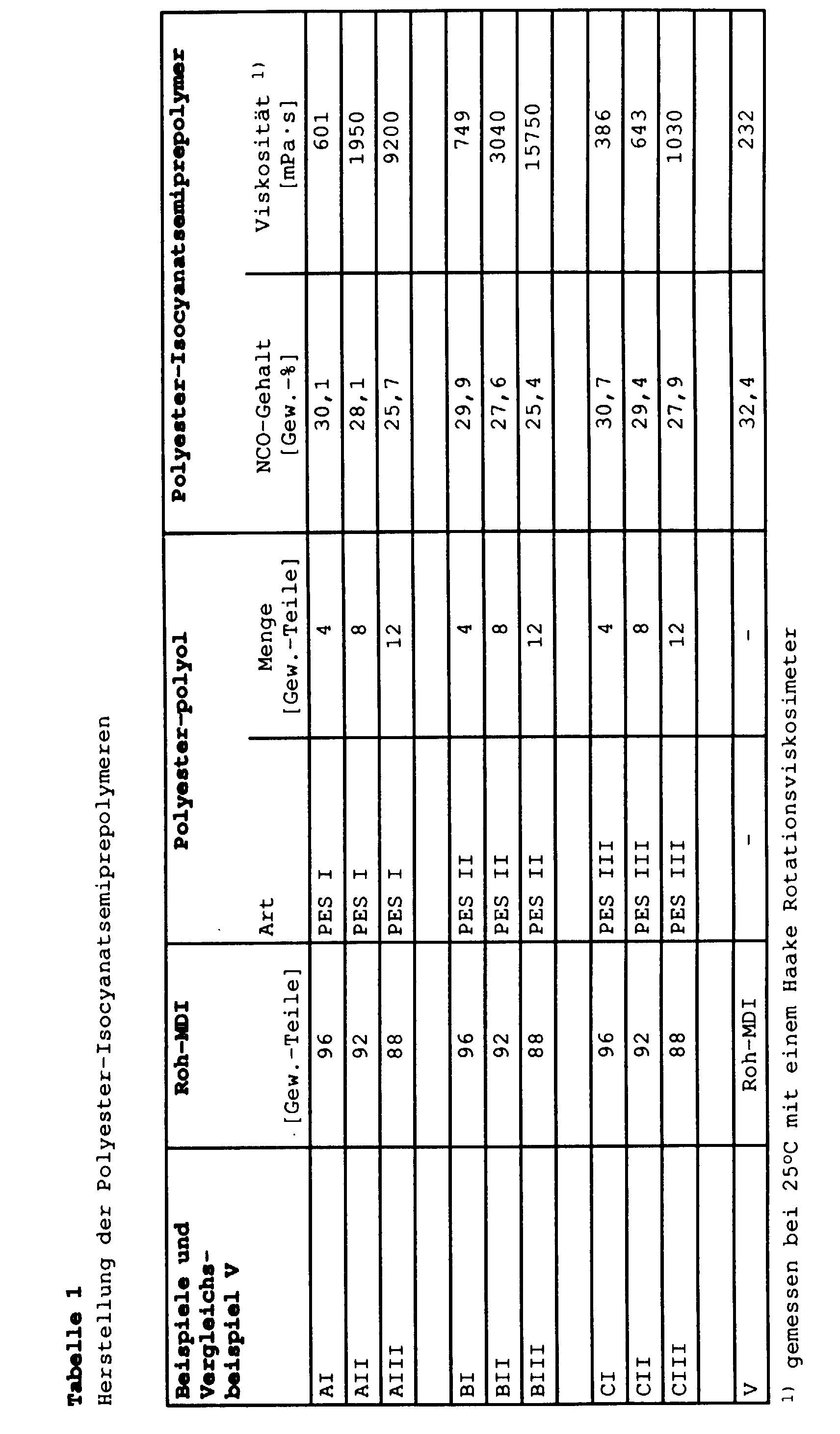

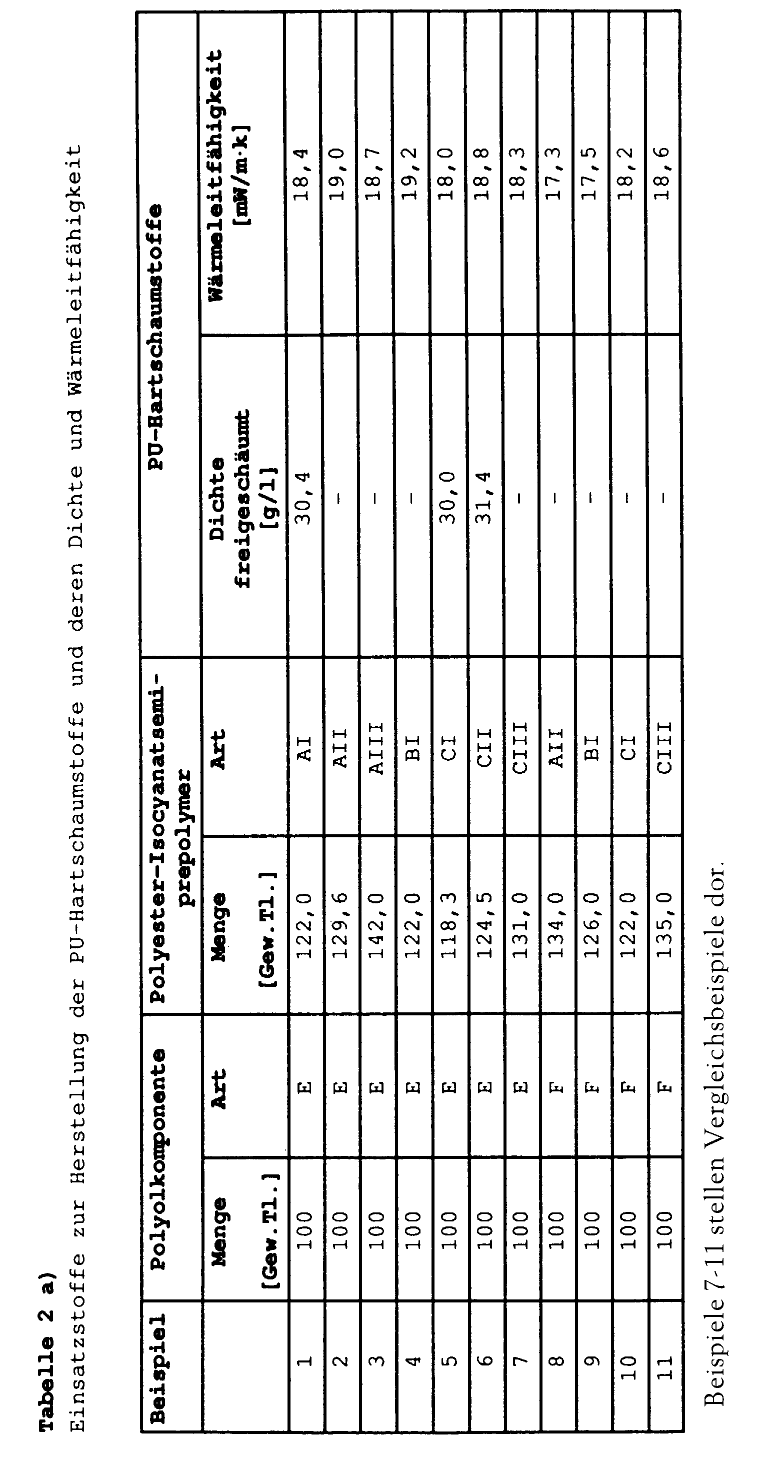

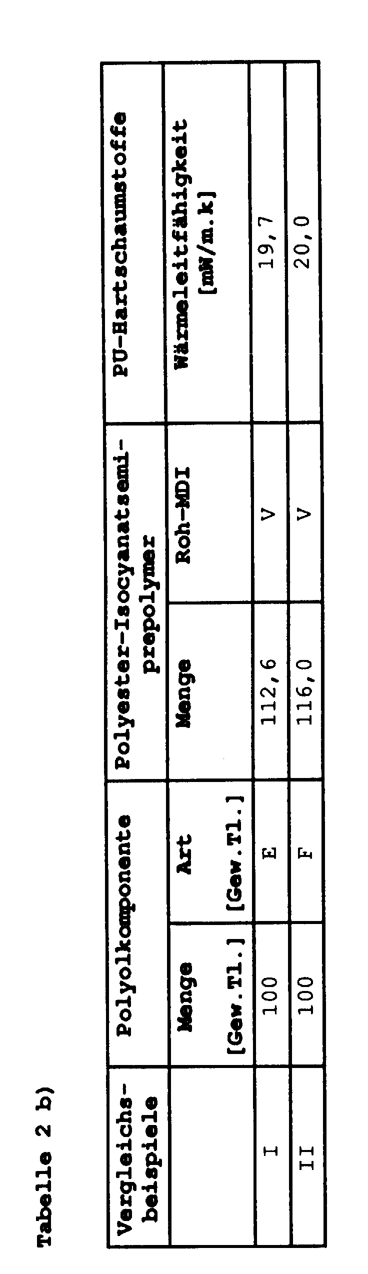

## Patentansprüche

1. Verfahren zur Herstellung von FCKW-freien Polyurethan-Hartschaumstoffen mit geringer Wärmeleitfähigkeit durch Umsetzung von
a) mindestens einer mit Urethangruppen modifizierten organischen Polyisocyanatmischung mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren und gegebenenfalls
f) Zusatzstoffen,
dadurch gekennzeichnet, daß man als mit Urethangruppen modifizierte Polyisocyanatmischungen (a) Polyester-Isocyanatsemiprepolymere mit einem NCO-Gehalt von 31 bis 20 Gew.-% verwendet, erhältlich durch Umsetzung einer überschüssigen Menge mindestens eines aromatischen Polyisocyanats mit mindestens einem Polyester-polyol mit einer Hydroxylzahl von 22 bis 400 auf Basis von aromatischen und/oder aliphatischen Dicarbonsäuren und/oder Dicarbonsäurederivaten und als Treibmittel (d) in Verbindung mit Wasser verwendet, (d2) Mischungen, enthaltend
(d2i) Cyclopentan, Cyclohexan oder ein Gemisch dieser Cycloalkane und
(d2ii) niedrigsiedende, mit Cyclopentan und/oder Cyclohexan homogen mischbare Verbindungen.

2. Verfahren nach Anspruch 1, dadurch gekennzeichnet, daß man zur Herstellung der Polyester-Isocyanatsemiprepolymeren (a) als aromatische Polyisocyanate 4,4'-, 2,4'- und 2,2'-Diphenylmethan-diisocyanat, Polyphenyl-polymethylen-polyisocyanate, Mischungen aus Diphenylmethan-diisocyanat-Isomeren und Polyphenyl-polymethylen-polyisocyanaten, 2,4- und 2,6-Toluylen-diisocyanat oder Mischungen aus mindestens zwei der genannten Polyisocyanate verwendet.

3. Verfahren nach Anspruch 1, dadurch gekennzeichnet, daß man zur Herstellung der Polyester-Isocyanatsemiprepolymeren (a) als aromatische Polyisocyanate Mischungen aus Diphenylmethan-diisocyanaten und Polyphenyl-polymethylen-polyisocyanaten mit einem Diphenylmethan-diisocyanat-Isomerengehalt von kleiner 45 Gew.-% verwendet.

4. Verfahren nach einem der Ansprüche 1 bis 3, dadurch gekennzeichnet, daß zur Herstellung der Polyester-Isocyanatsemiprepolymeren Polyester-polyole verwendet werden, die zu mindestens 10 Gew.-% Reste von aromatischen und/oder aliphatischen Dicarbonsäuren gebunden haben.

5. Verfahren nach einem der Ansprüche 1 bis 4, dadurch gekennzeichnet, daß zur Herstellung der Polyester-Isocyanatsemiprepolymeren Polyester-polyole verwendet werden, die erhältlich sind durch Polykondensation von Alkandicarbonsäuren mit 4 bis 6 C-Atomen, Phthalsäure und/oder den entsprechenden Dicarbonsäurederivaten und Mischungen aus Alkandiolen mit 2 bis 6 C-Atomen und Dialkylen-glykolen mit 4 bis 8 C-Atomen.

6. Verfahren nach einem der Ansprüche 1 bis 5, dadurch gekennzeichnet, daß man als Polyester-polyole Poly(ethandioldiethylenglykol-adipate) oder Poly(ethandiol-diethylenglykolphthalate) verwendet.

7. Verfahren nach einem der Ansprüche 1 bis 6, dadurch gekennzeichnet, daß man als höhermolekulare Verbindungen (b) Polyhydroxylverbindungen mit einer Funktionalität von 2 bis 8 und einer Hydroxylzahl von 100 bis 850 verwendet.

8. Verfahren nach einem der Ansprüche 1 bis 7, dadurch gekennzeichnet, daß man als höhermolekulare Verbindungen (b) Polyether-polyole mit einer Funktionalität von 2 bis 8 und einer Hydroxylzahl von 100 bis 850 verwendet, die hergestellt werden durch anionische Polyaddition von Ethylenoxid, 1,2-Propylenoxid oder Ethylenoxid und 1,2-Propylenoxid an mindestens ein aromatisches Startermolekül aus der Gruppe der aromatischen Polycarbonsäuren, aromatischen Hydroxycarbonsäuren und aromatischen Aminocarbonsäuren, der aromatischen Mono- und Polyamine, der Polyphenole und der Mannich-Kondensate aus Phenolen, Formaldehyd und Dialkanolaminen.

9. Verwendung von Polyurethan-Hartschaumstoffen, hergestellt nach dem Verfahren gemäß einem der Ansprüche 1 bis 8, als Zwischenschicht für Verbundelemente und zum Ausschäumen von Hohlräumen in Kühlmöbelgehäusen oder Heizungselementen.

## Claims

1. A process for producing CFC-free polyurethane rigid foams having low thermal conductivity by reacting
a) at least one organic polyisocyanate mixture modified with urethane groups with
b) at least one relatively high molecular weight compound containing at least two reactive hydrogen atoms and, if desired,
c) low molecular weight chain extenders and/or crosslinkers
in the presence of
d) blowing agents,
e) catalysts and, if desired,
f) additives,
wherein the polyisocyanate mixtures modified with urethane groups (a) are polyester isocyanate semiprepolymers containing from 31 to 20% by weight of NCO and obtainable by reacting an excess amount of at least one aromatic polyisocyanate with at least one polyester-polyol having a hydroxyl number of from 22 to 400 and based on aromatic and/or aliphatic dicarboxylic acids and/or dicarboxylic acid derivatives, and the blowing agents (d) used are, in combination with water, (d2) mixtures comprising
(d2i) cyclopentane, cyclohexane or a mixture of these cycloalkanes and
(d2ii) low-boiling compounds homogeneously miscible with cyclopentane and/or cyclohexane.

2. A process as claimed in claim 1, wherein the aromatic polyisocyanates used for preparing the polyester isocyanate semiprepolymers (a) are 4,4'-, 2,4'- and 2,2'-diphenylmethane diisocyanate, polyphenyl-polymethylene polyisocyanates, mixtures of diphenylmethane diisocyanate isomers and polyphenyl-polymethylene polyisocyanates, 2,4- and 2,6-tolylene diisocyanate or mixtures of at least two of the specified polyisocyanates.

3. A process as claimed in claim 1, wherein the aromatic polyisocyanates used for preparing the polyester isocyanate semiprepolymers (a) are mixtures of diphenylmethane diisocyanates and polyphenyl-polymethylene polyisocyanates having a diphenylmethane diisocyanate isomer content of less than 45% by weight.

4. A process as claimed in any one of claims 1 to 3, wherein the polyester-polyols used for preparing the polyester isocyanate semiprepolymers have at least 10% by weight of radicals of aromatic and/or aliphatic dicarboxylic acids bonded to them.

5. A process as claimed in any one of claims 1 to 4, wherein the polyester-polyols used for preparing the polyester isocyanate semiprepolymers are obtainable by polycondensation of alkanedicarboxylic acids having from 4 to 6 carbon atoms, phthalic acid and/or the corresponding dicarboxylic acid derivatives with mixtures of alkanediols having from 2 to 6 carbon atoms and dialkylene glycols having from 4 to 8 carbon atoms.

6. A process as claimed in any one of claims 1 to 5, wherein the polyester-polyols used are poly(ethanediol-diethylene glycol adipates) or poly(ethanediol-diethylene glycol phthalates).

7. A process as claimed in any one of claims 1 to 6, wherein the relatively high molecular weight compounds (b) used are polyhydroxyl compounds having a functionality of from 2 to 8 and a hydroxyl number of from 100 to 850.

8. A process as claimed in any one of claims 1 to 7, wherein the relatively high molecular weight compounds (b) used are polyether-polyols having a functionality of from 2 to 8 and a hydroxyl number of from 100 to 850 and are prepared by anionic polyaddition of ethylene oxide, 1,2-propylene oxide or ethylene oxide and 1,2-propylene oxide to at least one aromatic initiator molecule from the group consisting of aromatic polycarboxylic acids, aromatic hydroxycarboxylic acids and aromatic aminocarboxylic acids, aromatic monoamines and polyamines, polyphenols and Mannich condensates of phenols, formaldehyde and dialkanolamines.

9. The use of polyurethane rigid foams produced by the process as claimed in any one of claims 1 to 8 as intermediate layer for composite elements and for filling hollow spaces in housings of refrigeration appliances or heating elements with foam.

## Revendications

1. Procédé pour la préparation de mousses dures de polyuréthanne exemptes de fluorochlorocarbones, possédant une faible conductibilité thermique, par mise en réaction de
a) au moins un mélange de polyisocyanates organiques modifiés par des groupes uréthane, avec
b) au moins un composé à poids moléculaire élevé contenant au moins deux atomes d'hydrogène réactifs, et éventuellement
c) des agents d'allongement de chaînes et/ou des agents de réticulation à bas poids moléculaires,
en présence
d) d'agents moussants,
e) de catalyseurs et, le cas échéant,
f) d'additifs,
caractérisé en ce qu'on utilise, à titre de mélanges de polyisocyanates (a) modifiés par des groupes uréthane, des semi-prépolymères de polyester-isocyanates possédant une teneur NCO s'élevant de 31 à 20% en poids, que l'on obtient par mise en réaction d'une quantité en excès d'au moins un polyisocyanate aromatique avec au moins un polyester-polyol possédant un indice d'hydroxyle de 22 à 400 à base d'acides dicarboxyliques et/ou de dérivés d'acides dicarboxyliques aromatiques et/ou aliphatiques, et à titre d'agents moussants (d), en liaison avec de l'eau, des mélanges (d2) contenant
(d2i) du cyclopentane, du cyclohexane ou un mélange de ces cycloalcanes, et
(d2ii) des composés à bas points d'ébullition aptes à se mélanger de manière homogène avec le cyclopentane et/ou le cyclohexane.

2. Procédé selon la revendication 1, caractérisé en ce que, pour la préparation des semi-prépolymères (a) de polyester-isocyanates, à titre de polyisocyanates aromatiques, on utilise le 4,4'-, le 2,4'- et le 2,2'-diphénylméthane-diisocyanate, des polyphényl-polyméthylène-polyisocyanates, des mélanges d'isomères du diphénylméthane-diisocyanate et de polyphényl-polyméthylène-polyisocyanates, le 2,4- et le 2,6-toluylène-diisocyanate ou encore des mélanges d'au moins deux des polyisocyanates mentionnés.

3. Procédé selon la revendication 1, caractérisé en ce que, pour la préparation des semi-prépolymères de polyester-isocyanates (a), on utilise, à titre de polyisocyanates aromatiques, des mélanges de diphénylméthane-diisocyanates et de polyphényl-polyméthylène-polyisocyanates dont la teneur en isomères du diphénylméthane-diisocyanate est inférieure à 45% en poids.

4. Procédé selon l'une quelconque des revendications 1 à 3, caractérisé en ce que, pour la préparation des semi-prépolymères de polyester-isocyanates, on utilise des polyester-polyols qui possèdent, jusqu'à concurrence d'au moins 10% en poids, des radicaux d'acides dicarboxyliques aromatiques et/ou aliphatiques à l'état lié.

5. Procédé selon l'une quelconque des revendications 1 à 4, caractérisé en ce que, pour la préparation des semi-prépolymères de polyester-isocyanates, on utilise des polyester-polyols que l'on obtient par polycondensation d'acides alcanedicarboxyliques contenant de 4 à 6 atomes de carbone, l'acide phtalique et/ou les dérivés d'acides dicarboxyliques correspondants, et de mélanges d'alcanediols contenant de 2 à 6 atomes de carbone et de dialkylèneglycols contenant de 4 à 8 atomes de carbone.

6. Procédé selon l'une quelconque des revendications 1 à 5, caractérisé en ce qu'on utilise, à titre de polyester-polyols, des polyadipates d'éthanediol-diéthylèneglycol ou des polyphtalates d'éthanediol-diéthylèneglycol.

7. Procédé selon l'une quelconque des revendications 1 à 6, caractérisé en ce qu'on utilise, à titre de composés (b) à poids moléculaires élevés, des composés polyhydroxylés possédant une fonctionnalité de 2 à 8 et un indice d'hydroxyle de 100 à 850.

8. Procédé selon l'une quelconque des revendications 1 à 7, caractérisé en ce qu'on utilise, à titre de composés (b) à poids moléculaires élevés, des polyéther-polyols possédant une fonctionnalité de 2 à 8 et un indice d'hydroxyle de 100 à 850, que l'on prépare par polyaddition anionique d'oxyde d'éthylène, d'oxyde de 1,2-propylène ou d'oxyde d'éthylène et d'oxyde de 1,2-propylène sur au moins une molécule d'amorçage aromatique choisie parmi le groupe comprenant des acides polycarboxyliques aromatiques, des acides hydroxycarboxyliques aromatiques et des acides aminocarboxyliques aromatiques, des mono- et polyamines aromatiques, des polyphénols et des condensats de Mannich de phénols, de formaldéhyde et de dialcanolamines.

9. Utilisation de mousses dures de polyuréthanne préparées conformément au procédé selon l'une quelconque des revendications 1 à 8, à titre de couche intermédiaire pour des éléments composites et pour le remplissage à l'aide de mousse d'espaces creux ménagés dans des carrosseries de réfrigérateurs ménagers ou dans des éléments de chauffage.
